# EUROPÄISCHE PATENTSCHRIFT

(11) **EP 1 517 266 B1**
(45) Veröffentlichungstag und Bekanntmachung des Hinweises auf die Patenterteilung: **09.04.2008**
(21) Anmeldenummer: 03020922.5
(22) Anmeldetag: 16.09.2003
(51) Int. Cl.: G06K 19/077, B42D 15/00

(54) **Verfahren und Vorrichtung zum Einbringen einer elektronischen Schaltkreisanordnung in ein buchförmiges Dokument sowie hiernach hergestelltes buchförmiges Dokument**
Method and apparatus for inserting an electronic circuit into a book-type document and this obtained document
Procédé et dispositif d'incorporation d'un circuit électronique dans un document en forme de livre et document ainsi obtenu

(43) Veröffentlichungstag der Anmeldung: 23.03.2005
(73) Patentinhaber: Kugler-Womako GmbH, 72622 Nürtingen (DE)
(72) Erfinder: Kneule, Mario, 72636 Frickenhausen (DE); Lüdicke, Peter, 72636 Frickenhausen (DE)
(74) Vertreter: Eisenführ, Speiser & Partner

(56) Entgegenhaltungen:
- WO-A-02/089052
- DE-A- 4 226 237
- JP-A- 11 348 471
- US-A1- 2003 057 286

## Beschreibung

Die Erfindung betrifft ein Verfahren sowie eine Vorrichtung zum Einbringen einer elektronischen Schaltkreisanordnung in ein buchförmiges Dokument, insbesondere Ausweisdokument, das mindestens eine vordere und eine hintere Außenseite und zwei Innenseiten aufweist, sowie ein solches buchförmiges Dokument.

Ein solches Verfahren, eine solche Vorrichtung sowie ein solches buchförmiges Dokument sind beispielsweise aus der JP 11-348471 A bekannt, welche den nächstkommenden Stand der Technik bildet, von dem die vorliegende Erfindung ausgeht.

Um die Sicherheit von Pässen zu verbessern, kann in den Pass ein Mikrochip eingebracht werden, in dem personenbezogene und biometrische Daten abgespeichert werden. Von den USA wird gefordert, dass ab dem 01. Oktober 2004 bei der Einreise ein Pass mit einem solchen Mikrochip präsentiert wird. Andernfalls muss vor der Einreise ein Visum beantragt werden. Die Forderung führt dazu, dass derzeit in verschiedenen Staaten über die Einbringung eines solchen Mikrochips in den Pass nachgedacht wird. Eine Richtlinie der International Civil Aviation Organisation legt fest, dass der Speicherplatzbedarf für personenbezogene und biometrische Daten in der Größenordnung von 32 bis 64 kByte liegen soll.

Bislang sind folgende Lösungen bekannt:
- Der Mikrochip, der kleiner als das Format des Passes ist, wird zwischen Vorsatzblatt und Decke des Passes einkaschiert. Nachteilig ist bei dieser bekannten Lösung, dass der Mikrochip durch die Decke hindurch einen Abdruck hinterlässt. Außerdem wird nur ein verhältnismäßig geringer mechanischer Schutz für den Mikrochip erreicht.
- Bei einer weiteren bekannten Lösung wird der Mikrochip in die Passdecke integriert, indem der Mikrochip in das Deckmaterial eingegossen wird. Mit dieser Lösung muss bei der Passherstellung kein wesentlicher zusätzlicher Aufwand getrieben werden. Allerdings können bei dieser Lösung Mikrochips mit einer maximalen Kapazität von 8 kByte eingebunden werden, was aber nicht ausreichend ist.
- Bei einer weiteren herkömmlichen Lösung wird der Mikrochip in eine Polykarbonatkarte eingebunden, die ohnehin bei einigen Ländern im Pass vorhanden ist und normallesbare sowie maschinenlesbare Daten trägt. Auch hier ist aber die maximale Kapazität auf 8 kByte beschränkt. Ein weiterer Nachteil ist die feste Verknüpfung von zwei personalisierten Passelementen, so dass für Fälschungen beispielsweise lediglich die Polykarbonatkarte manipuliert werden müsste.

Eine Aufgabe der vorliegenden Erfindung besteht deshalb darin, eine Lösung vorzusehen, bei welcher die zuvor beschriebenen Nachteile des Standes der Technik im Wesentlichen vermieden werden.

Diese Aufgabe wird gemäß einem ersten Aspekt der Erfindung gelöst durch ein Verfahren zum Einbringen einer elektronischen Schaltkreisanordnung in ein buchförmiges Dokument, insbesondere Ausweisdokument, das mindestens eine vordere und eine hintere Außenseite und zwei Innenseiten aufweist, dadurch gekennzeichnet, dass die elektronische Schaltkreisanordnung zwischen zwei benachbarten Innenseiten jeweils an diesen befestigt wird.

Ferner wird die Aufgabe gemäß einem zweiten Aspekt der vorliegenden Erfindung gelöst durch eine Vorrichtung zum Einbringen einer elektronischen Schaltkreisanordnung in ein buchförmiges Dokument, das mindestens eine vordere und eine hintere Außenseite und zwei Innenseiten aufweist, gekennzeichnet durch Befestigungsmittel zur Befestigung der elektronischen Schaltkreisanordnung zwischen zwei benachbarten Innenseiten jeweils an diesen.

Schließlich wird zur Lösung der Aufgabe gemäß einem dritten Aspekt der vorliegenden Erfindung ein buchförmiges Dokument, insbesondere Ausweisdokument, mit mindestens einer vorderen und einer hinteren Außenseite und zwei Innenseiten sowie mit einer elektronischen Schaltkreisanordnung, dadurch gekennzeichnet, dass die elektronische Schaltkreisanordnung zwischen zwei benachbarten Innenseiten jeweils an diesen befestigt ist, vorgeschlagen.

Die erfindungsgemäße Lösung hat verschiedene Vorteile. Die erfindungsgemäße Befestigung der elektronischen Schaltkreisanordnung zwischen zwei benachbarten Innenseiten im Inneren des buchförmigen Dokumentes führt zu einem homogenen Buch. Auf diese Weise entsteht eine neue, etwas dickere Seite, die gemeinsam von zwei benachbarten Innenseiten und der zwischen diesen liegenden elektronischen Schaltkreisanordnung gebildet wird. Hierzu müssen nicht zwangsläufig die bereits vorhandenen normalen Innenseiten verwendet werden; auch die Verwendung eines gesondert für diesen Zweck zu befestigenden Bogens aus Papier oder Folie ist denkbar. Es gibt keine Erhebungen in der Decke des Dokumentes, welche erhöhtem Verschleiß ausgesetzt wären. Ferner können die elektronische Schaltkreisanordnung und eine zusätzliche personalisierte Seite des Dokumentes voneinander getrennt angeordnet werden, so dass für Fälschungen beide Komponenten manipuliert werden müssten, wodurch eine Fälschung aber erschwert würde.

Die Erfindung eignet sich bevorzugt für buchförmige Ausweisdokumente wie beispielsweise Pässe, Ausweise u. dgl.. Gleichwohl kann die Erfindung selbstverständlich auch bei allen anderen Arten von buchförmigen Dokumenten Anwendung finden, insbesondere wenn die Dokumente sicherheitsrelevant sind. Hierzu zählen beispielsweise auch Sparbücher, Scheckhefte u. dgl..

Weitere bevorzugte Ausführungen der Erfindung sind in den abhängigen Ansprüchen angegeben.

So kann zweckmäßigerweise die elektronische Schaltkreisanordnung mit den zwei benachbarten Innenseiten verklebt werden.

Bei einer bevorzugten Ausführung, bei welcher die Außenseiten und die Innenseiten des buchförmigen Dokumentes durch ein Bindemittel, vorzugsweise eine Naht, gebunden werden, wird die elektronische Schaltkreisanordnung in der Mitte des buchförmigen Dokumentes angeordnet. Auf diese Weise lässt sich das Bindemittel verbergen, was wiederum Fälschungen erschwert.

Eine weitere bevorzugte Ausführung der Erfindung, bei welcher zur Herstellung der Innenseiten Bögen zugeführt werden, die mindestens zwei in derselben Ausrichtung nebeneinander liegende Flächen-abschnitte aufweisen, deren Längen- und Breitenabmessungen mindestens denen der daraus herzustellenden Innenseiten entsprechen, zeichnet sich dadurch aus, dass die elektronische Schaltkreisanordnung auf einen ersten Flächenabschnitt eines Bogens gelegt und daran befestigt wird und anschließend entweder der benachbarte zweite Flächenabschnitt dieses Bogens auf dessen ersten Flächenabschnitt oder dessen erster Flächenabschnitt auf dessen zweiten Flächenabschnitt gefaltet und dadurch die elektronische Schaltkreisanordnung am zweiten Flächenabschnitt befestigt wird. Dabei sollte vor Anordnung der elektronischen Schaltkreisanordnung auf den ersten Flächenabschnitt dieses Bogens dessen erster Flächenabschnitt mit Klebemittel versehen werden. Spätestens vor Umfalten des ersten Flächenabschnittes des Bogens auf den zweiten Flächenabschnitt, vorzugsweise bereits vor Anordnung der elektronischen Schaltkreisanordnung auf den ersten Flächenabschnitt, sollte der zweite Flächenabschnitt ebenfalls mit Klebemittel versehen werden. Alternativ oder zusätzlich ist es aber auch denkbar, vor Anordnung der elektronischen Schaltkreisanordnung auf den ersten Flächenabschnitt des Bogens die elektronische Schaltkreisanordnung zumindest an ihrer mit dem ersten Flächenabschnitt in Berührung bringbaren Seite mit Klebemittel zu versehen und spätestens vor Umfalten des zweiten Flächenabschnittes des Bogens auf den zweiten Flächenabschnitt, vorzugsweise bereits vor Anordnung der elektronischen Schaltkreisanordnung auf den ersten Flächenabschnitt, die elektronische Schaltkreisanordnung zumindest an ihrer mit dem zweiten Flächenabschnitt in Berührung bringbaren Seite mit Klebemittel zu versehen. Auf diese Weise lässt sich die elektronische Schaltkreisanordnung besonders einfach mit den beiden benachbarten Innenseiten verkleben.

Gewöhnlich werden die Bögen in Mehrfachnutzen zugeführt und werden zur Herstellung des buchförmigen Dokumentes die Mehrfachnutzen in Einzelnutzen getrennt. In einem solchen Fall sollte zweckmäßigerweise vor Trennung in Einzelnutzen die elektronische Schaltkreisanordnung an den ersten und zweiten Flächenabschnitten des obersten Bogens eines Mehrfachnutzens befestigt werden. Demnach setzt die erfindungsgemäße Einbringung und Befestigung der elektronischen Schaltkreisanordnung vor dem Trennen der Mehrfachnutzen in Einzelnutzen an. Denn zu diesem Zeitpunkt ist das Produkt noch ein flaches, ungefaltetes Halbzeug und lässt deshalb eine besonders einfache Anbringung der elektronischen Schaltkreisanordnung zu, wodurch sich die erfindungsgemäße Anordnung und Befestigung der elektronischen Schaltkreisanordnung unkompliziert in den Herstellungsprozess integrieren lässt. Der dann mit der elektronischen Schaltkreisanordnung versehene Nutzen kann anschließend getrennt, gefaltet und dann ausgeschnitten oder auf sonstige Weise weiterverarbeitet werden, wobei es auch denkbar ist, erst zu falten und dann die Mehrfachnutzen zu trennen.

Vorzugsweise entsprechen die Längen- und/oder Breitenabmessungen der elektronischen Schaltkreisanordnung etwa denen einer Innenseite, wodurch die elektronische Schaltkreisanordnung etwa die Größe des buchförmigen Dokumentes besitzt und sich deshalb besonders einfach in das Dokument integrieren lässt.

Zweckmäßigerweise weist die elektronische Schaltkreisanordnung einen Mikrochip und ein Trägerelement auf. Vorzugsweise sitzt der Mikrochip im Trägerelement, wodurch die elektronische Schaltkreisanordnung eine gleichmäßige Dicke hat. Dass das Trägerelement vorzugsweise vollformatig sein kann, bedeutet nicht, dass auch der Mikrochip selbst vollformatig sein muss. Vielmehr ist es denkbar, dass die Fläche des Mikrochip kleiner als die Fläche des Trägerelementes ist, wodurch das Trägerelement weiteren Bearbeitungsschritten wie beispielsweise einer Nummernperforation unterzogen werden kann, der Mikrochip selbst dabei aber unversehrt bleibt.

Nachfolgend wird ein bevorzugtes Ausführungsbeispiel der Erfindung anhand der beiliegenden Zeichnungen näher erläutert. Es zeigen:
- Figur 1: schematisch in geschnittener Stirnansicht einen fertig hergestellten Pass gemäß einer bevorzugten Ausführung der Erfindung im aufgeschlagenen Zustand;
- Figur 2 a-e: schematisch in mehreren Schritten das Aufkleben eines Chipträgers auf den obersten Bogen eines Mehrfachnutzens; und
- Figur 3: schematisch in Draufsicht einen doppelnutzigen Chipträger gemäß einem bevorzugten Ausführungsbeispiel.

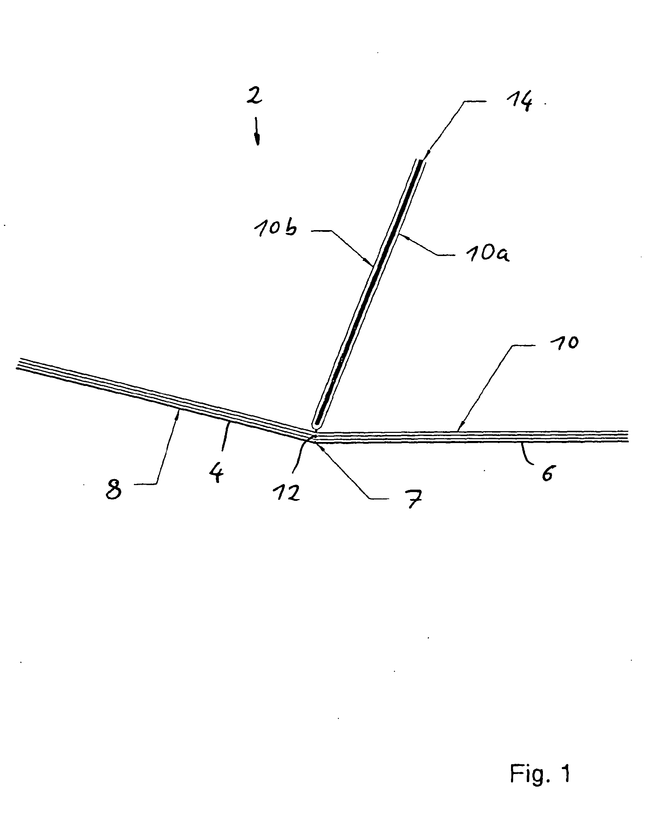

In Figur 1 ist in quergeschnittener Stirnansicht eine bevorzugte Ausführung eines buchförmigen Passes 2 dargestellt, der eine Vorderseite 4 und eine Rückseite 6 aufweist, die über einen Buchrückenabschnitt 7 einstückig miteinander verbunden und von einer gemeinsamen Passdecke 8 gebildet sind. Im Inneren des in Figur 1 im aufgeschlagenen Zustand dargestellten Passes 2 zwischen der Vorderseite 4 und der Rückseite ist eine Vielzahl von Innenseiten 10 angeordnet, die zusammen mit der Vorderseite 4 und der Rückseite 6 im Bereich des Buchrückenabschnittes 7 im dargestellten Ausführungsbeispiel durch eine Naht 12 gebunden sind.

Ferner enthält der Pass 2 eine Mikrochipanordnung, die aus einem plättchenförmigen Chipträger 14 und einem Mikrochip besteht, der im Chipträger 14 enthalten und deshalb in Figur 1 nicht erkennbar ist. Der Chipträger 14, der in dem in Figur 1 gezeigten Ausführungsbeispiel ein Blättchen bildet, kann insbesondere aus Kunststoff wie beispielsweise PET oder Polycarbonat bestehen. Es ist aber auch denkbar, als Material für den Chipträger 14 Papier oder Karton zu verwenden. Gewöhnlich ist die Fläche des im Chipträger 14 enthaltenen Mikrochip kleiner als die des Chipträgers 14.

Wie Figur 1 ferner erkennen lässt, ist der Chipträger 14 mit den beiden mittleren Innenseiten 10a und 10b des Passes 2 so verklebt, dass praktisch eine neue, etwas dickere Innenseite genau in der Mitte des Passes 2 entsteht. Mit einer solchen Anordnung wird nicht nur eine Befestigung des Chipträgers 14 im Inneren des Passes 2 erzielt, sondern gleichzeitig auch die Naht 12 verborgen, was Fälschungen erschwert.

Im dargestellten Ausführungsbeispiel besitzt der Chipträger 14 etwa die Größe einer Innenseite 10 und somit des Passes. Es ist aber auch selbstverständlich denkbar, die Fläche des Chipträgers 10 kleiner als die der Innenseiten 10 auszubilden. Dadurch, dass, wie bereits zuvor erwähnt, der Mikrochip im Chipträger 14 enthalten ist, besitzt der Chipträger 14 eine gleichmäßige Dicke, wodurch sich die von den beiden mittleren Innenseiten 10a und 10b und dem dazwischenliegenden Chipträger 14 gebildete gemeinsame Seite unauffällig in den Pass 2 einfügt. Alternativ ist es aber auch denkbar, den Mikrochip auf dem Chipträger 14 anzuordnen, wobei dann allerdings eine entsprechende Erhebung in Kauf zu nehmen ist.

Ferner ist es denkbar, den Chipträger 14 nicht mit den beiden mittleren Innenseiten 10a und 10b, wie in Figur 1 beispielhaft gezeigt ist, zu verkleben, sondern mit zwei anderen benachbarten Innenseiten, zwischen denen der Chipträger 14 angeordnet wird; allerdings muss dann bei dieser Variante in Kauf genommen werden, dass die Naht 12 in der Mitte des Passes 2 sichtbar bleibt. Ebenfalls ist es bei Bedarf ausreichend, den Chipträger 14 nur an einer der Innenseiten 10 zu befestigen. Schließlich müssen zur Befestigung des Chipträgers 14 nicht zwangsläufig die vorhandenen Innenseiten 10 verwendet werden, sondern es ist auch die Verwendung eines eigens hierfür eingenähten Bogens denkbar, der beispielsweise aus Papier oder Folie bestehen und gegebenenfalls, um den Mikrochip oder gar den gesamten Chipträger 14 zu verbergen, mit mindestens einer der beiden benachbarten Innenseiten oder mit sich selbst verklebt werden kann. Bei einer Verklebung mit sich selbst wird der Chipträger 14 in einem Format, welches größer, beispielsweise breiter, als eine Innenseite 10 ist, eingenäht und der die Innenseiten 10 und die Naht 12 überragende Teil mit dem anderen Teil verklebt.

Die den Chipträger 14 halternde Innenseite(n) kann (können) mit personalisierten Daten bedruckt sein. Es ist jedoch zur Erhöhung der Fälschungssicherheit sinnvoll, personalisierte Daten auf eine derjenigen Innenseiten 10 aufzudrucken, die nicht für die Befestigung des Chipträgers 14 verwendet werden, wozu alternativ auch die Vorderseite 4 und/oder die Rückseite 6 in Frage kommen könnten. Auf diese Weise sind der Chipträger 14 und die personalisierte Seite(n) des Passes 2 voneinander getrennt, so dass im Falle einer Fälschung diese beiden Elemente des Passes 2 manipuliert werden müssten, wodurch eine Fälschung aber erschwert würde.

Dass im dargestellten Ausführungsbeispiel der Chipträger 14 vollformatig ist, bedeutet nicht, dass auch der Mikrochip selbst vollformatig sein muss. Wie bereits zuvor erwähnt, kann die Fläche des Mikrochip kleiner als die des Chipträgers 14 sein. Dabei kann der Mikrochip im Chipträger 14 so angeordnet sein, dass der Chipträger 14 weiteren Bearbeitungsschritten wie beispielsweise einer Nummerperforation unterworfen werden kann, der Mikrochip selbst dabei aber unversehrt bleibt. Selbstverständlich ist es alternativ aber auch denkbar, den gesamten Chipträger 14 für die Integration von elektronischen Schaltungen zu verwenden, wobei dann allerdings perforierende oder ähnliche spanabhebende Bearbeitungen am Chipträger 14 nicht möglich sind.

Nachfolgend wird auf das Verfahren zur Herstellung des zuvor beschriebenen Passes 2 näher eingegangen. Zur Herstellung werden zunächst Einzelbögen zu Stapeln zusammengetragen und vernäht. Diese Einzelbögen sind gewöhnlich etwas größer, als es das Passfertigformat erfordert. Durch einen späteren Formschnitt wird eine gerade Außenkante des buchförmigen Passes erzielt. Zur Steigerung der Maschinenleistung können diese Einzelbögen aus Mehrfachnutzen bestehen, die mehrere Nutzen hintereinander aufweisen. Danach werden die Mehrfachnutzen getrennt, die so entstandenen Einzelnutzen gefalzt und das Fertigformat des Passes ausgeschnitten, wobei es auch möglich ist, erst zu falzen und dann die Mehrfachnutzen zu trennen.

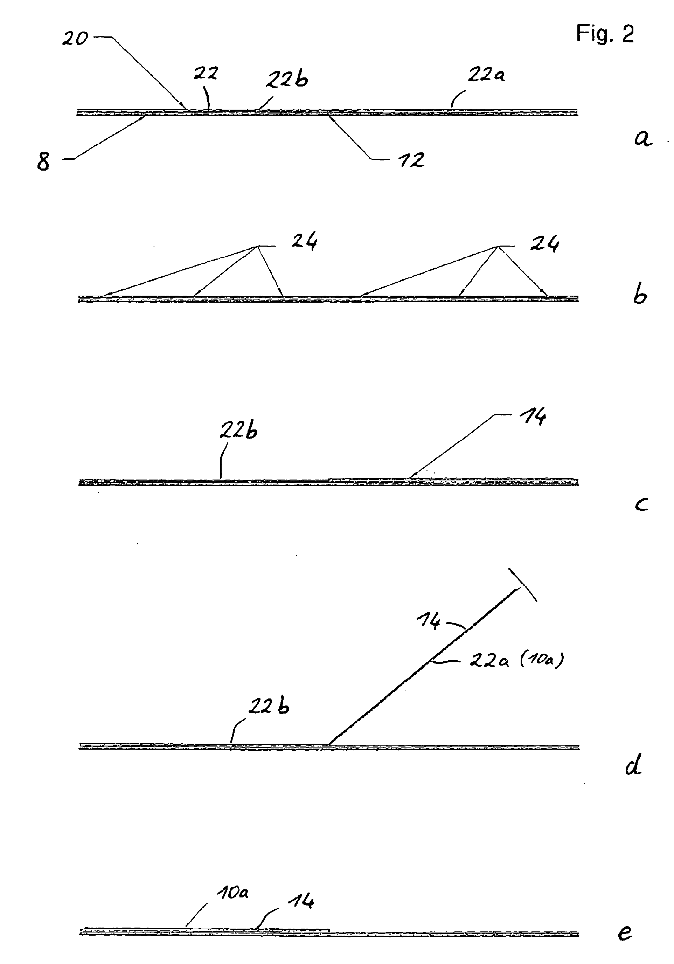

Das Verkleben des Chipträgers 14, welches schematisch in Figur 2 gezeigt ist, setzt vor dem Trennen an. Zu diesem Zeitpunkt bildet das Produkt noch ein flaches, ungefaltetes Halbzeug. Dieser Zeitpunkt ist schematisch in Figur 2a dargestellt, welche in Seitenansicht einen Stapel von Mehrfachnutzen 20 zeigt, dessen oberster Bogen mit dem Bezugszeichen 22 gekennzeichnet ist und einen ersten Flächenabschnitt 22a und einen zweiten Flächenabschnitt 22b aufweist. Im dargestellten Zustand ist der Nutzen bereits genäht, wobei die Naht 12 den ersten Flächenabschnitt 22a vom zweiten Flächenabschnitt 22b des obersten Bogens 22 trennt und dabei eine Grenzlinie zwischen diesen beiden Flächenabschnitten 22a, 22b bildet. Ferner ist auf die Rückseite des genähten Nutzens, welche in der Ansicht von Figur 2a die Unterseite des Mehrfachnutzens 20 bildet, die Passdecke 8 ebenfalls bereits aufkaschiert.

Nun wird gemäß Figur 2b die gesamte Innenseite des Mehrfachnutzens 20, welche in der Ansicht von Figur 2b die Oberseite des obersten Bogens 22 bildet, mit einem Klebemittel 24 beauftragt. Als Klebemittel 24 kann beispielsweise Kaltleim oder ein Transferband verwendet werden. Anstatt die gesamte Innen- bzw. Oberseite mit Klebemittel zu versehen, ist es ebenfalls denkbar, nur die Flächenabschnitte 22a und 22b vollständig oder auch nur punktuell mit dem Klebemittel 24 zu beauftragen.

Anschließend wird der - gegebenenfalls mehrnutzige - Chipträger 14 zugeführt und auf den die eine Hälfte des noch offenen Buches bildenden ersten Flächenabschnitt 22a des obersten Bogens 22 gelegt und aufgrund des bereits vorhandenen Klebemittels 24 entsprechend verklebt. Dieser Zustand ist in Figur 2c gezeigt. Anschließend wird der Chipträger 14 angehoben und in Richtung auf die gegenüberliegende Seite umgeklappt, wie Figur 2d erkennen lässt. Hierbei nimmt der Chipträger 14 den mit ihm bereits verklebten ersten Flächenabschnitt 22a des obersten Bogens 22 mit. Auf diese Weise wird der erste Flächenabschnitt 22a, der später die eine Innenseite 10a des fertigen Passes 2 (vgl. Figur 1) bildet, in Richtung auf den zweiten Flächenabschnitt 22b gefaltet, welcher später die andere Innenseite 10b des fertigen Passes 2 (vgl. Figur 1) bildet.

Nachdem der Chipträger 14 auf die gegenüberliegende Seite umgeklappt worden ist, liegt er auf dem zweiten Flächenabschnitt 22b des obersten Bogens 22 auf und wird aufgrund des ebenfalls dort bereits vorhandenen Klebemittels 24 mit diesem verklebt. Dieser Zustand ist in Figur 2e gezeigt.

An dieser Stelle sei ergänzend darauf hingewiesen, dass das Klebemittel 24 alternativ nicht auf den Bogen 22, sondern stattdessen auf den Chipträger 14 aufgebracht werden kann. Auch ein kombinierter Auftrag des Klebemittels 24 sowohl auf den Bogen 22 als auch auf dem Chipträger 14 ist ebenfalls denkbar. Schließlich ist es auch möglich, nicht die Seite mit dem Chipträger 14, sondern die gegenüberliegende Seite umzuklappen bzw. umzufalten, um mit dem Chipträger 14 verklebt zu werden.

Der nun mit dem Chipträger 14 versehene Nutzen wird anschließend, wie bereits oben erwähnt, entsprechend weiterverarbeitet, indem er beispielsweise getrennt, gefalzt und ausgeschnitten wird. Während dieser Weiterverarbeitung kann ebenfalls gleichzeitig der Chipträger 14 auf das gewünschte Fertigformat beschnitten werden.

Gewöhnlich haben die Mehrfachnutzen etwa DIN-A4-Format, während ein fertiger Pass etwa DIN-A6-Format besitzt. Somit nehmen zwei nebeneinanderliegende Seiten eines aufgeschlagenen bzw. aufgeklappten Passes etwa eine DIN-A5-Fläche in Anspruch, so dass auf einen Mehrfachnutzen zwei Seitenpaare von zwei unterschiedlichen Pässen passen, welche vor der Trennung entlang ihrer einen Ränder (späteren unteren Randes des einen Passes und späteren oberen Randes des anderen Passes) vor der Trennung miteinander verbunden sind. Dann kann bei einer solchen Anordnung ein doppelt hoher Chipträger mit zwei Chips für die beiden Pässe auf die eine Hälfte des obersten Mehrfachnutzens geklebt und dann mit der anderen Hälfte verklebt werden, bevor der Mehrfachnutzen zur Bildung der beiden Pässe entsprechend getrennt wird.

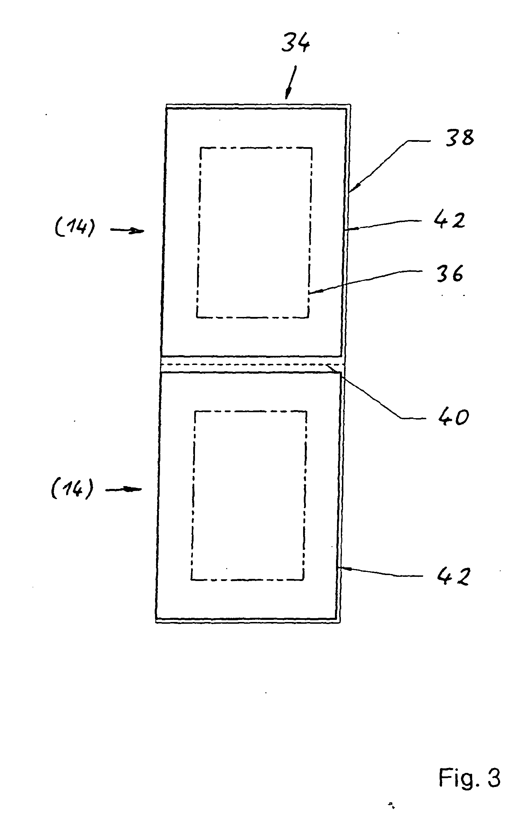

Figur 3 zeigt ein Beispiel für einen doppelnutzigen Chipträger 34, der zwei voneinander getrennte Flächenabschnitte 36 für jeweils einen Mikrochip und beispielsweise auch eine Antenne aufweist. Der doppelnutzige Chipträger 34 wird durch einen sogenannten Seitenschnitt 38 begrenzt und in seiner Mitte zwischen den beiden Flächenabschnitten 36 durch eine Trennschnittlinie 40 unterteilt. Durch Vornahme eines Trennschnittes entlang der Trennschnittlinie 40 und durch Beschneiden auf ein Fertigformat 42 entstehen dann zwei einzelne Chipträger 14, deren Gesamtfläche ein wenig kleiner ist als die Fläche des doppelnutzigen Chipträgers 34, wie Figur 3 ferner erkennen lässt.

## Patentansprüche

1. Verfahren zum Einbringen einer elektronischen Schaltkreisanordnung (14) in ein buchförmiges Dokument (2), insbesondere Ausweisdokument, das mindestens eine vordere und eine hintere Außenseite (4, 6) und zwei Innenseiten (10a, 10b) aufweist,
**dadurch gekennzeichnet, dass** die elektronische Schaltkreisanordnung (14) zwischen zwei benachbarten Innenseiten (10a, 10b) jeweils an diesen befestigt wird.

2. Verfahren nach Anspruch 1,
**dadurch gekennzeichnet, dass** die elektronische Schaltkreisanordnung (14) mit den zwei benachbarten Innenseiten (10a, 10b) verklebt wird.

3. Verfahren nach Anspruch 1 oder 2, wobei die Außenseiten (4, 6) und die Innenseiten (10) des buchförmigen Dokumentes (2) durch ein Bindemittel (12), vorzugsweise eine Naht, gebunden werden,
**dadurch gekennzeichnet, dass** die elektronische Schaltkreisanordnung (14) in der Mitte des buchförmigen Dokumentes (2) angeordnet wird.

4. Verfahren nach mindestens einem der Ansprüche 1 bis 3, bei welchem zur Herstellung der Innenseiten (10) Bögen (22) zugeführt werden, die mindestens zwei in derselben Ausrichtung nebeneinanderliegende Flächenabschnitte (22a, 22b) aufweisen, deren Längen- und Breitenabmessungen mindestens denen der daraus herzustellenden Innenseiten (10) entsprechen,
**gekennzeichnet durch** die Schritte,
- die elektronische Schaltkreisanordnung (14) auf einen ersten Flächenabschnitt (22a) eines Bogens (22) zu legen und daran zu befestigen und
- dann entweder den benachbarten zweiten Flächenabschnitt (22b) dieses Bogens (22) auf dessen ersten Flächenabschnitt (22a) oder dessen erster Flächenabschnitt (22a) auf dessen zweiten Flächenabschnitt (22b) zu falten und **dadurch** die elektronische Schaltkreisanordnung (14) am zweiten Flächenabschnitt (22b) zu befestigen.

5. Verfahren nach den Ansprüchen 2 und 4,
**dadurch gekennzeichnet, dass** vor Anordnung der elektronischen Schaltkreisanordnung (14) auf dem ersten Flächenabschnitt (22a) des Bogens (22) dessen erster Flächenabschnitt (22a) mit Klebemittel (24) versehen wird.

6. Verfahren nach Anspruch 4 oder 5,
**dadurch gekennzeichnet, dass** spätestens vor Umfalten des ersten Flächenabschnittes (22a) des Bogens (22) auf den zweiten Flächenabschnitt (22b), vorzugsweise bereits vor Anordnung der elektronischen Schaltkreisanordnung (14) auf dem ersten Flächenabschnitt (22a), der zweite Flächenabschnitt (22b) mit Klebemittel (24) versehen wird.

7. Verfahren nach mindestens einem der Ansprüche 4 bis 6,
**dadurch gekennzeichnet, dass** vor Anordnung der elektronischen Schaltkreisanordnung (14) auf dem ersten Flächenabschnitt (22a) des Bogens (22) die elektronische Schaltkreisanordnung (14) zumindest an ihrer mit dem ersten Flächenabschnitt (22a) in Berührung bringbaren Seite mit Klebemittel (24) versehen wird.

8. Verfahren nach mindestens einem der Ansprüche 4 bis 7,
**dadurch gekennzeichnet, dass** spätestens vor Umfalten des ersten Flächenabschnittes (22a) des Bogens (22) auf den zweiten Flächenabschnitt (22b), vorzugsweise bereits vor Anordnung der elektronischen Schaltkreisanordnung (14) auf dem ersten Flächenabschnitt (22a), die elektronische Schaltkreisanordnung (14) zumindest an ihrer mit dem zweiten Flächenabschnitt (22b) in Berührung bringbaren Seite mit Klebemittel (24) versehen wird.

9. Verfahren nach mindestens einem der Ansprüche 4 bis 8, bei welchem die Bögen (22) in Mehrfachnutzen (20) zugeführt werden und zur Herstellung des buchförmigen Dokumentes (2) die Mehrfachnutzen (20) in Einzelnutzen getrennt werden,
**dadurch gekennzeichnet, dass** vor Trennung in Einzelnutzen die elektronische Schaltkreisanordnung (14) an den ersten und zweiten Flächenabschnitten (22a, 22b) des obersten Bogens (22) eines Mehrfachnutzens (20) befestigt wird.

10. Verfahren nach mindestens einem der vorangegangenen Ansprüche,
**dadurch gekennzeichnet, dass** die elektronische Schaltkreisanordnung einen Mikrochip und ein Trägerelement (14), in dem der Mikrochip sitzt, aufweist.

11. Vorrichtung zum Einbringen einer elektronischen Schaltkreisanordnung (14) in ein buchförmiges Dokument (2), das mindestens eine vordere und eine hintere Außenseite (4, 6) und zwei Innenseiten (10a, 10b) aufweist,
**gekennzeichnet durch** Befestigungsmittel zur Befestigung der elektronischen Schaltkreisanordnung (14) zwischen zwei benachbarten Innenseiten (10a, 10b) jeweils an diesen.

12. Vorrichtung nach Anspruch 11,
**dadurch gekennzeichnet, dass** die Befestigungsmittel zur Verklebung der elektronischen Schaltkreisanordnung (14) mit zwei benachbarten Innenseiten (10a, 10) ausgebildet sind.

13. Vorrichtung nach Anspruch 11 oder 12, bei welcher die Innenseiten (10a, 10b) des buchförmigen Dokumentes (2) durch ein Bindemittel, vorzugsweise eine Naht, bindbar sind,
**dadurch gekennzeichnet, dass** die Befestigungsmittel zur Anordnung der elektronischen Schaltkreisanordnung (14) in der Mitte des buchförmigen Dokumentes (2) ausgebildet sind.

14. Vorrichtung nach mindestens einem der Ansprüche 11 bis 13, bei welcher zur Herstellung der Innenseiten Bögen (22) zuführbar sind, die mindestens zwei in derselben Ausrichtung nebeneinanderliegende Flächenabschnitte (22a, 22b) aufweisen, deren Längen- und Breitenabmessungen mindestens denen der daraus herzustellenden Innenseiten (10) entsprechen,
**dadurch gekennzeichnet, dass** die Befestigungsmittel erste Mittel zur Anordnung und Befestigung der elektronischen Schaltkreisanordnung (14) auf einem ersten Flächenabschnitt (22a) eines Bogens (22) sowie zweite Mittel zum Falten des benachbarten zweiten Flächenabschnittes (22b) dieses Bogens (22) auf dessen ersten Flächenabschnitt (22a) oder zum Falten des ersten Flächenabschnittes (22a) auf den zweiten Flächenabschnitt (22b) und zur Befestigung der elektronischen Schaltkreisanordnung (14) am zweiten Flächenabschnitt (22b) aufweisen.

15. Vorrichtung nach den Ansprüchen 12 und 14,
**dadurch gekennzeichnet, dass** die Klebeauftragsmittel zum Auftrag von Klebemittel (24) auf die mit dem ersten Flächenabschnitt (22a) des Bogens (22) in Berührung bringbaren Seite der elektronischen Schaltkreisanordnung (14) vor deren Anordnung auf dem ersten Flächenabschnitt (22a) ausgebildet sind.

16. Vorrichtung nach Anspruch 12 sowie nach Anspruch 14 oder 15,
**dadurch gekennzeichnet, dass** die Klebeauftragsmittel zum Auftrag von Klebemittel (24) auf die mit dem zweiten Flächenabschnitt (22b) des Bogens (22) in Berührung bringbare Seite der elektronischen Schaltkreisanordnung (14) vor Umfalten des ersten Flächenabschnittes (22a) auf den zweiten Flächenabschnitt (22b), vorzugsweise vor Anordnung der elektronischen Schaltkreisanordnung (14) auf den ersten Flächenabschnitt (22a), ausgebildet sind.

17. Vorrichtung nach mindestens einem der Ansprüche 14 bis 16, bei welcher die Bögen (22) in Mehrfachnutzen (20) zuführbar und zur Herstellung des buchförmigen Dokumentes (2) die Mehrfachnutzen (20) in Einzelnutzen trennbar sind,
**dadurch gekennzeichnet, dass** die Befestigungsmittel zur Befestigung der elektronischen Schaltkreisanordnung (14) an den ersten und zweiten Flächenabschnitten (22a, 22b) des obersten Bogens (22) eines Mehrfachnutzens (20) vor Trennung des Mehrfachnutzens (20) in Einzelnutzen ausgebildet sind.

18. Vorrichtung nach mindestens einem der Ansprüche 11 bis 17,
**dadurch gekennzeichnet, dass** die Längen- und Breitenabmessungen der elektronischen Schaltkreisanordnung (14) etwa denen einer Innenseite (10) entsprechen.

19. Buchförmiges Dokument, insbesondere Ausweisdokument, mit mindestens einer vorderen und einer hinteren Außenseite (4, 6) und zwei Innenseiten (10a, 10b) sowie mit einer elektronischen Schaltkreisanordnung (14),
**dadurch gekennzeichnet, dass** die elektronische Schaltkreisanordnung (14) zwischen zwei benachbarten Innenseiten (10a, 10b) jeweils an diesen befestigt ist.

20. Dokument nach Anspruch 19, bei welchem die Innenseiten (10a, 10b) durch ein Bindemittel (12), vorzugsweise eine Naht, gebunden sind,
**dadurch gekennzeichnet, dass** die elektronische Schaltkreisanordnung (14) in der Mitte des buchförmigen Dokumentes (2) angeordnet ist.

21. Dokument nach Anspruch 19 oder 20,
**dadurch gekennzeichnet, dass** die Längen- und/oder Breitenabmessungen der elektronischen Schaltkreisanordnung (14) etwa denen einer Innenseite (10) entsprechen.

22. Dokument nach mindestens einem der Ansprüche 19 bis 21
**dadurch gekennzeichnet, dass** die elektronische Schaltkreisanordnung einen Mikrochip und ein Trägerelement (14), in dem der Mikrochip sitzt, aufweist.

23. Dokument nach Anspruch 22,
**dadurch gekennzeichnet, dass** die Fläche des Mikrochip kleiner als die Fläche des Trägerelementes (14) ist.

## Claims

1. Method for inserting an electronic circuit arrangement (14) into a book-type document (2), in particular identification document, which has at least a front and a back outer page (4, 6) and two inner pages (10a, 10b), **characterised in that** the electronic circuit arrangement (14) is fixed between two adjacent inner pages (10a, 10b) and to each of said inner pages (10a, 10b).

2. Method according to Claim 1, **characterised in that** the electronic circuit arrangement (14) is bonded to the two adjacent inner pages (10a, 10b).

3. Method according to Claim 1 or 2, in which the outer pages (4, 6) and the inner pages (10) of the book-type document (2) are bound together by a binding means (12), preferably a stitched seam, **characterised in that** the electronic circuit arrangement (14) is arranged in the middle of the book-type document (2).

4. Method according to at least one of Claims 1 to 3, in which, for producing the inner pages (10), sheets (22) are supplied which have at least two adjacent planar sections (22a, 22b) disposed in the same orientation, the length and width dimensions of which are at least equal to those of the inner pages (10) to be produced therefrom, **characterised by** the steps:
- placing of the electronic circuit arrangement (14) on a first planar section (22a) of a sheet (22) and fixing of said electronic circuit arrangement (14) to said first planar section (22a), and
- either folding of the adjacent second planar section (22b) of this sheet (22) on to the first planar section (22a) thereof or folding of the first planar section (22a) thereof on to the second planar section (22b) thereof, and thereby fixing of the electronic circuit arrangement (14) to the second planar section (22b).

5. Method according to Claims 2 and 4, **characterised in that**, prior to the arrangement of the electronic circuit arrangement (14) on the first planar section (22a) of the sheet (22), the first planar section (22a) thereof is provided with adhesive (24).

6. Method according to Claim 4 or 5, **characterised in that**, not later than the folding over of the first planar section (22a) of the sheet (22) on to the second planar section (22b), and preferably prior to the arrangement of the electronic circuit arrangement (14) on the first planar section (22a), the second planar section (22b) is provided with adhesive (24).

7. Method according to at least one of Claims 4 to 6, **characterised in that**, prior to the arrangement of the electronic circuit arrangement (14) on the first planar section (22a) of the sheet (22), the electronic circuit arrangement (14) is provided with adhesive (24) at least on its side which can be brought into contact with the first planar section (22a).

8. Method according to at least one of Claims 4 to 7, **characterised in that**, not later than the folding of the first planar section (22a) of the sheet (22) on to the second planar section (22b), and preferably prior to the arrangement of the electronic circuit arrangement (14) on the first planar section (22a), the electronic circuit arrangement (14) is provided with adhesive (24) at least on its side which can be brought into contact with the second planar section (22b).

9. Method according to at least one of Claims 4 to 8, in which the sheets (22) are supplied in multiple panels (20) and the multiple panels (20) are cut into single panels for producing the book-type document (2), **characterised in that** prior to the cutting into single panels the electronic circuit arrangement (14) is fixed to the first and second planar sections (22a, 22b) of the top sheet (22) of a multiple panel (20).

10. Method according to at least one of the preceding claims, **characterised in that** the electronic circuit arrangement comprises a microchip and a carrier element (14) in which the microchip is mounted.

11. Apparatus for inserting an electronic circuit arrangement (14) into a book-type document (2) which has at least a front and a back outer page (4, 6) and two inner pages (10a, 10b), **characterised by** fixing means for fixing the electronic circuit arrangement (14) between two adjacent inner pages (10a, 10b) and to each of said inner pages (10a, 10b).

12. Apparatus according to Claim 11, **characterised in that** the fixing means are configured for bonding of the electronic circuit arrangement (14) to two adjacent inner pages (10a, 10).

13. Apparatus according to Claim 11 or 12, in which the inner pages (10a, 10b) of the book-type document (2) can be bound together by a binding means, preferably a stitched seam, **characterised in that** the fixing means are configured for arranging the electronic circuit arrangement (14) in the middle of the book-type document (2).

14. Apparatus according to at least one of Claims 11 to 13, in which, for producing the inner pages, sheets (22) can be supplied which have at least two adjacent planar sections (22a, 22b) disposed in the same orientation, the length and width dimensions of which are at least equal to those of the inner pages (10) to be produced therefrom, **characterised in that** the fixing means comprise first means for arranging and fixing the electronic circuit arrangement (14) on a first planar section (22a) of a sheet (22), and second means for folding the adjacent second planar section (22b) of this sheet (22) on to the first planar section (22a) thereof or for folding the first planar section (22a) on to the second planar section (22b), and for fixing the electronic circuit arrangement (14) on the second planar section (22b).

15. Apparatus according to Claims 12 and 14, **characterised in that** the adhesive application means are configured for applying adhesive (24) to the side of the electronic circuit arrangement (14) which can be brought into contact with the first planar section (22a) of the sheet (22) prior to the arrangement of said electronic circuit arrangement (14) on the first planar section (22a).

16. Apparatus according to Claim 12 and according to Claim 14 or 15, **characterised in that** the adhesive application means are configured for applying adhesive (24) to the side of the electronic circuit arrangement (14) which can be brought into contact with the second planar section (22b) of the sheet (22) prior to the folding over of the first planar section (22a) on to the second planar section (22b), and preferably prior to the arrangement of the electronic circuit arrangement (14) on the first planar section (22a).

17. Apparatus according to at least one of Claims 14 to 16, in which the sheets (22) can be supplied in multiple panels (20) and the multiple panels (20) can be cut into single panels for producing the book-type document (2), **characterised in that** the fixing means are configured for fixing the electronic circuit arrangement (14) to the first and second planar sections (22a, 22b) of the top sheet (22) of a multiple panel (20) prior to the cutting of the multiple panel (20) into single panels.

18. Apparatus according to at least one of Claims 11 to 17, **characterised in that** the length and width dimensions of the electronic circuit arrangement (14) correspond approximately to those of an inner page (10).

19. Book-type document, in particular identification document, comprising at least a front and a back outer page (4, 6) and two inner pages (10a, 10b), together with an electronic circuit arrangement (14), **characterised in that** the electronic circuit arrangement (14) is fixed between two adjacent inner pages (10a, 10b) and to each of said inner pages (10a, 10b).

20. Document according to Claim 19, in which the inner pages (10a, 10b) are bound together by a binding means (12), preferably a stitched seam, **characterised in that** the electronic circuit arrangement (14) is arranged in the middle of the book-type document (2).

21. Document according to Claim 19 or 20, **characterised in that** the length and/or width dimensions of the electronic circuit arrangement (14) correspond approximately to those of an inner page (10).

22. Document according to at least one of Claims 19 to 21, **characterised in that** the electronic circuit arrangement comprises a microchip and a carrier element (14) in which the microchip is mounted.

23. Document according to Claim 22, **characterised in that** the area of the microchip is smaller than the area of the carrier element (14).

## Revendications

1. Procédé pour incorporer un ensemble formant circuit électronique (14) dans un document en forme de livre (2), en particulier un document d'identité, qui présente au moins une page extérieure avant et une page extérieure arrière (4, 6) et deux pages intérieures (10a, 10b),
**caractérisé en ce que** l'ensemble formant circuit électronique (14) est fixé entre deux pages intérieures (10a, 10b) voisines, à chacune de celles-ci.

2. Procédé selon la revendication 1,
**caractérisé en ce que** l'ensemble formant circuit électronique (14) est collé aux deux pages intérieures (10a, 10b) voisines.

3. Procédé selon la revendication 1 ou 2, les pages extérieures (4, 6), et les pages intérieures (10) du document en forme de livre (2) étant reliées par un moyen de reliure (12), de préférence une couture,
**caractérisé en ce que** l'ensemble formant circuit électronique (14) est disposé au centre du document en forme de livre (2).

4. Procédé selon l'une au moins des revendications 1 à 3, suivant lequel sont amenées, pour la fabrication des pages intérieures (10), des feuilles (22) qui présentent au moins deux secteurs de surface (22a, 22b) positionnés l'un à côté de l'autre suivant la même orientation, dont les dimensions en longueur et en largeur correspondent au moins à celles des pages intérieures (10) devant être fabriquées à partir d'eux,
**caractérisé par** les étapes consistant
- à poser l'ensemble formant circuit électronique (14) sur un premier secteur de surface (22a) d'une feuille (22) et à le fixer à ce dernier, et
- à plier ensuite soit le deuxième secteur de surface (22b), voisin, de cette feuille (22), sur son premier secteur de surface (22a), soit son premier secteur de surface (22a) sur son deuxième secteur de surface (22b), et à fixer ainsi l'ensemble formant circuit électronique (14) au deuxième secteur de surface (22b).

5. Procédé selon les revendications 2 et 4,
**caractérisé en ce qu'**avant la mise en place de l'ensemble formant circuit électronique (14) sur le premier secteur de surface (22a) de la feuille (22), le premier secteur de surface (22a) de cette dernière est pourvu d'adhésif (24).

6. Procédé selon la revendication 4 ou 5,
**caractérisé en ce qu'**au plus tard avant le repliage du premier secteur de surface (22a) de la feuille (22) sur le deuxième secteur de surface (22b), de préférence dès avant la mise en place de l'ensemble formant circuit électronique (14) sur le premier secteur de surface (22a), le deuxième secteur de surface (22b) est pourvu d'adhésif (24).

7. Procédé selon l'une au moins des revendications 4 à 6,
**caractérisé en ce qu'**avant la mise en place de l'ensemble formant circuit électronique (14) sur le premier secteur de surface (22a) de la feuille (22), l'ensemble formant circuit électronique (14) est pourvu d'adhésif (24), au moins sur sa face susceptible d'être mise en contact avec le premier secteur de surface (22a).

8. Procédé selon l'une au moins des revendications 4 à 7,
**caractérisé en ce qu'**au plus tard avant le repliage du premier secteur de surface (22a) de la feuille (22) sur le deuxième secteur de surface (22b), de préférence dès avant la mise en place de l'ensemble formant circuit électronique (14) sur le premier secteur de surface (22a), l'ensemble formant circuit électronique (14) est pourvu d'adhésif (24), au moins sur sa face susceptible d'être mise en contact avec le deuxième secteur de surface (22b).

9. Procédé selon l'une au moins des revendications 4 à 8, suivant lequel les feuilles (22) sont amenées en copies multiples (20) et, pour la fabrication du document en forme de livre (2), les copies multiples (20) sont sectionnées en copies individuelles,
**caractérisé en ce qu'**avant le sectionnement en copies individuelles, l'ensemble formant circuit électronique (14) est fixé aux premier et deuxième secteurs de surface (22a, 22b) de la plus haute feuille (22) d'une copie multiple (20).

10. Procédé selon l'une au moins des revendications précédentes,
**caractérisé en ce que** l'ensemble formant circuit électronique présente une micropuce et un élément de support (14), dans lequel la micropuce repose.

11. Dispositif pour incorporer un ensemble formant circuit électronique (14) dans un document en forme de livre (2), qui présente au moins une page extérieure avant et une page extérieure arrière (4, 6) et deux pages intérieures (10a, 10b),
**caractérisé par** des moyens de fixation destinés à assurer la fixation de l'ensemble formant circuit électronique (14) entre deux pages intérieures (10a, 10b) voisines, à chacune de celles-ci.

12. Dispositif selon la revendication 11,
**caractérisé en ce que** les moyens de fixation sont conçus pour coller l'ensemble formant circuit électronique (14) à deux pages intérieures (10a, 10b) voisines.

13. Dispositif selon la revendication 11 ou 12, suivant lequel les pages intérieures (10a, 10b) du document en forme de livre (2) peuvent être reliées par un moyen de reliure, de préférence une couture,
**caractérisé en ce que** les moyens de fixation sont conçus pour la mise en place de l'ensemble formant circuit électronique (14) au centre du document en forme de livre (2).

14. Dispositif selon l'une au moins des revendications 11 à 13, suivant lequel peuvent être amenées, pour la fabrication des pages intérieures, des feuilles (22) qui présentent au moins deux secteurs de surface (22a, 22b) positionnés l'un à côté de l'autre suivant la même orientation, dont les dimensions en longueur et en largeur correspondent au moins à celles des pages intérieures (10) devant être fabriquées à partir d'eux,
**caractérisé en ce que** les moyens de fixation présentent des premiers moyens pour mettre en place et fixer l'ensemble formant circuit électronique (14) sur un premier secteur de surface (22a) d'une feuille (22), ainsi que des deuxièmes moyens pour plier le deuxième secteur de surface (22b), voisin, de cette feuille (22) sur son premier secteur de surface (22a), ou pour plier le premier secteur de surface (22a) sur le deuxième secteur de surface (22b), et pour fixer l'ensemble formant circuit électronique (14) au deuxième secteur de surface (22b).

15. Dispositif selon les revendications 12 et 14,
**caractérisé en ce que** les moyens d'application d'adhésif sont conçus pour appliquer de l'adhésif (24) sur la face, susceptible d'être mise en contact avec le premier secteur de surface (22a) de la feuille (22), de l'ensemble formant circuit électronique (14), avant la mise en place de ce dernier sur le premier secteur de surface (22a).

16. Dispositif selon la revendication 12 ainsi que selon la revendication 14 ou 15,
**caractérisé en ce que** les moyens d'application d'adhésif sont conçus pour appliquer de l'adhésif (24) sur la face, susceptible d'être mise en contact avec le deuxième secteur de surface (22b) de la feuille (22), de l'ensemble formant circuit électronique (14), avant le repliage du premier secteur de surface (22a) sur le deuxième secteur de surface (22b), de préférence avant la mise en place de l'ensemble formant circuit électronique (14) sur le premier secteur de surface (22a).

17. Dispositif selon l'une au moins des revendications 14 à 16, suivant lequel les feuilles (22) peuvent être amenées en copies multiples (20) et, pour la fabrication du document en forme de livre (2), les copies multiples (20) sont sectionnables en copies individuelles,
**caractérisé en ce que** les moyens de fixation sont conçus pour fixer l'ensemble formant circuit électronique (14) aux premier et deuxième secteurs de surface (22a, 22b) de la plus haute feuille (22) d'une copie multiple (20), avant le sectionnement de la copie multiple (20) en copies individuelles.

18. Dispositif selon l'une au moins des revendications 11 à 17,
**caractérisé en ce que** les dimensions en longueur et en largeur de l'ensemble formant circuit électronique (14) correspondent sensiblement à celles d'une page intérieure (10).

19. Document en forme de livre, en particulier document d'identité, comportant au moins une page extérieure avant et une page extérieure arrière (4, 6) et deux pages intérieures (10a, 10b), ainsi qu'un ensemble formant circuit électronique (14),
**caractérisé en ce que** l'ensemble formant circuit électronique (14) est fixé entre deux pages intérieures (10a, 10b) voisines, à chacune de celles-ci.

20. Document selon la revendication 19, dans lequel les pages intérieures (10a, 10b) sont reliées par un moyen de reliure (12), de préférence une couture,
**caractérisé en ce que** l'ensemble formant circuit électronique (14) est disposé au centre du document en forme de livre (2).

21. Document selon la revendication 19 ou 20,
**caractérisé en ce que** les dimensions en longueur et/ou en largeur de l'ensemble formant circuit électronique (14), correspondent sensiblement à celles d'une page intérieure (10).

22. Document selon l'une au moins des revendications 19 à 21,
**caractérisé en ce que** l'ensemble formant circuit électronique présente une micropuce et un élément de support (14), dans lequel la micropuce repose.

23. Document selon la revendication 22,
**caractérisé en ce que** la surface de la micropuce est plus petite que la surface de l'élément de support (14).
